(19) Europäisches Patentamt

European Patent Office

Office européen des brevets

(11) **EP 1 392 521 B1**

(12) **EUROPÄISCHE PATENTSCHRIFT**

(45) Veröffentlichungstag und Bekanntmachung des Hinweises auf die Patenterteilung:
**03.11.2004 Patentblatt 2004/45**

(21) Anmeldenummer: 02762279.4

(22) Anmeldetag: **31.05.2002**

(51) Int Cl.⁷: $B42D\ 15/10$

(86) Internationale Anmeldenummer:
**PCT/EP2002/005988**

(87) Internationale Veröffentlichungsnummer:
**WO 2002/100654 (19.12.2002 Gazette 2002/51)**

(54) **DIFFRAKTIVES SICHERHEITSELEMENT**

DIFFRACTIVE SAFETY ELEMENT

ELEMENT DE SECURITE A DIFFRACTION

(84) Benannte Vertragsstaaten:
**DE FR GB**

(30) Priorität: **08.06.2001 DE 10127979**

(43) Veröffentlichungstag der Anmeldung:
**03.03.2004 Patentblatt 2004/10**

(73) Patentinhaber: **OVD Kinegram AG**
**6301 Zug (CH)**

(72) Erfinder:
• **SCHILLING, Andreas**
**CH-6332 Hagendorn (CH)**
• **TOMPKIN, Wayne, Robert**
**CH-5400 Baden (CH)**

(74) Vertreter: **Zinsinger, Norbert**
**Louis Pöhlau Lohrentz,**
**P.O. Box 30 55**
**90014 Nürnberg (DE)**

(56) Entgegenhaltungen:
**US-A- 4 568 141    US-A- 4 984 824**
**US-A- 5 032 003    US-A- 5 737 886**

• **PATENT ABSTRACTS OF JAPAN vol. 1999, no. 03, 31. März 1999 (1999-03-31) & JP 10 332916 A (TOPPAN PRINTING CO LTD), 18. Dezember 1998 (1998-12-18)**
• **PATENT ABSTRACTS OF JAPAN vol. 1997, no. 12, 25. Dezember 1997 (1997-12-25) & JP 09 220892 A (TOPPAN PRINTING CO LTD), 26. August 1997 (1997-08-26)**

**Beschreibung**

Die Erfindung bezieht sich auf ein diffraktives Sicherheitselement gemäss dem Oberbegriff des Anspruchs 1.

Solche diffraktive Sicherheitselemente werden für die Beglaubigung der Echtheit eines Dokuments verwendet und zeichnen sich durch ein optisch variables Muster aus, das sich durch Drehen oder Kippen für den Beobachter in auffälliger Art und Weise vorbestimmt ändert.

Derartige diffraktive Sicherheitselemente sind aus vielen Quellen bekannt, stellvertretend sind hier die EP 0 105 099 B1, EP 0 330 738 B1, EP 0 375 833 B1 genannt. Sie zeichnen sich durch die Brillanz der Muster und den Bewegungseffekt im Muster aus, sind in ein dünnes Laminat aus Kunststoff eingebettet und werden in Form einer Marke auf Dokumente, wie Banknoten, Wertpapiere, Personalausweise, Pässe, Visa, Identitätskarten usw. aufgeklebt. Zur Herstellung der Sicherheitselemente verwendbare Materialien sind in der EP 0 201 323 B1 zusammengestellt.

Moderne Kopierer und Scanner - Einrichtungen sind in der Lage, ein solches Dokument scheinbar farbgetreu zu duplizieren. Die diffraktiven Sicherheitselemente werden mitkopiert, wobei die Brillanz und der Bewegungseffekt verloren gehen, so dass das beim Original unter einem einzigen vorbestimmten Blickwinkel sichtbare Muster mit den Druckfarben eines Farbkopierers abgebildet wird. Solche Kopien von Dokumenten können bei schlechten Lichtverhältnissen oder bei Unaufmerksamkeit leicht mit dem Original verwechselt werden. Die bekannten Sicherheitselemente weisen den Nachteil auf, dass die Kopien als solche für den Mann auf der Strasse nicht leicht erkennbar sind.

Aus der EP 0 490 457 B1 ist bekannt, dass in einem visuell erkennbaren Bild ein zweites, visuell nicht erkennbares Bild aus feinen Linienstücken eingebracht werden kann. Der Inhalt des zweiten Bilds ist in der Neigung der Linienstücke gegenüber den Linienstücken des Hintergrunds codiert. Beim Kopieren erscheint das zweite Bild über dem ersten Bild mit einer Schwärzung, die von den Neigungswinkeln der Linienstücke abhängig ist. Daher ist zweite Bild von der Lage des Originals auf der Kopiermaschine abhängig. Theoretische Betrachtungen dazu sind in "Optical Document Security", van Renesse, Editor, ISDN Nummer 0-89006-982-4, Seiten 127 - 148 dargelegt.

Der Erfindung liegt die Aufgabe zugrunde, ein visuell erkennbares, kostengünstiges diffraktives Sicherheitselement mit einem optisch variablen Flächenmuster zu schaffen, das in einer von einem Farbkopierer erzeugten Kopie eine zweite, vom Flächenmuster unabhängige, vom blossen Auge nicht sichtbare, versteckte Information aufweist.

Die genannte Aufgabe wird erfindungsgemäss durch die im Kennzeichen des Anspruchs 1 angegebenen Merkmale gelöst. Vorteilhafte Ausgestaltungen der Erfindung ergeben sich aus den abhängigen Ansprüchen.

Ausführungsbeispiele der Erfindung sind in der Zeichnung dargestellt und werden im folgenden näher beschrieben.

Es zeigen:

Figur 1      einen Querschnitt durch ein optisch variables Sicherheitselement,

Figur 2      ein Flächenmuster,

Figur 3      eine Einheitszelle mit einer Elementfläche mit zirkularem Beugungsgitter,

Figur 4      andere Einheitszellen,

Figur 5      einen Querschnitt durch eine optische Abtastvorrichtung,

Figur 6      ein vergrössertes Original des Sicherheitselements

Figur 7      eine vergrösserte Kopie des Sicherheitselements und

Figur 8      eine Schrifttafel im Sicherheitselement.

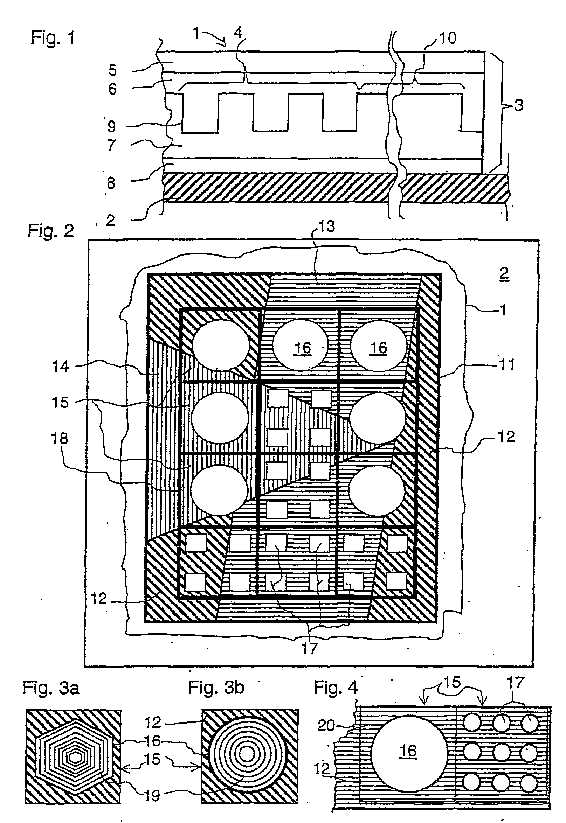

In der Figur 1 bedeutet 1 ein optisch variables Sicherheitselement, 2 ein Substrat, 3 einen Schichtverbund, 4 eine mikroskopisch feine Struktur, 5 eine Deckschicht, 6 eine Lackschicht, 7 eine Schutzlackschicht, 8 eine Klebeschicht, 9 eine Grenzschicht und 10 eine Spiegelfläche. Im gezeigten Querschnitt durch ein Dokument ist der Schichtverbund 3 des Sicherheitselements 1 mittels der Klebeschicht 8 mit dem Substrat 2 verbunden. Als Dokumente sind vor allem Ausweise, Banknoten, Visa, Wertpapiere, Eintrittkarten usw. gemeint, die als Substrat 2 für das Sicherheitselement 1 dienen und deren Echtheit durch das aufgeklebte Sicherheitselement 1 begfaubigt ist. Die mikroskopisch feinen, mechanisch oder holographisch erzeugten, optisch wirksamen Strukturen 4 sind in einem Schichtverbund 3 aus Kunststoff eingebettet. Beispielsweise besteht der Schichtverbund 3 in der angegebenen Reihenfolge aus der glasklaren, transparenten Deckschicht 5. Unter der Deckschicht 5 ist eine transparente Lackschicht 6 angeordnet, in die die mikroskopisch feine Struktur 4 abgeformt ist. Die Struktur 4 ist mit einer Schutzlackschicht 7 derart überdeckt, dass Furchen der Struktur 4 von der Schutzlackschicht 7 verfüllt sind und die Struktur 4 zwischen der Lackschicht 6 und der Schutzlackschicht 7 eingebettet ist. Zwischen dem Substrat 2 und der Schutzlackschicht 7 ist eine Klebeschicht 8 angeordnet, um den Schichtverbund 3 fest mit dem Substrat 2 zu verbinden. Die Schichten 5 und 6 bzw. 7 und 8 können in anderen Ausführungen jeweils aus demselben Material bestehen, so dass eine Grenzfläche zwischen den Schichten 5 und 6 bzw. 7 und 8 entfällt. Die Struktur 4 bestimmt die Form einer Grenzfläche 9 zwischen den Schichten 6 und 7. Die optische Wirksamkeit der Grenzfläche 9 steigt mit der Differenz der Brechungsindices der Materialien in den beiden angrenzenden Schichten, der Lackschicht 6 und der Schutzlackschicht 7. Zur Verstärkung der optischen Wirksamkeit der Grenzfläche 9 ist die Struktur 4 vor dem Aufbringen der Schutzlackschicht 7 mit einer im Vergleich zu den Tiefen der Furchen dünnen, metallischen oder dielektrischen Reflexionsschicht überzogen. Andere Ausführungen des Schichtverbunds 3 und die für transparenten oder nichttransparenten Sicherheitselemente 9 verwendbare Materialien sind in der eingangs erwähnten EP 0 201 323 B1 beschrieben. Die in der Figur 1 gezeigte Struktur 4 ist nur symbolisch als einfache Rechteckstruktur gezeichnet und steht für allgemeine, optisch wirksame Strukturen 4, wie lichtbeugende Reliefstrukturen, lichtstreuende Reliefstrukturen oder Spiegelflächen 10 (Fig. 1). Bekannte lichtbeugende Reliefstrukturen sind lineare oder zirkulare Beugungsgitter und Hologramme. Die lichtstreuenden Reliefstrukturen sind beispielsweise Mattstrukturen.

In der Figur 2 ist das auf dem Substrat 2 angebrachte Sicherheitselement 1 gezeigt. Durch die Deckschicht 5 (Fig. 1) hindurch erkennt ein Beobachter aus vorbestimmten Beobachtungsrichtungen visuell den Effekt der optisch wirksamen Strukturen 4 (Fig. 1) eines Flächenmusters 11. Das Flächenmuster 11 ist ein Mosaik aus vielen Flächenelementen 12, 13, 14, in deren Flächen die optisch wirksamen Strukturen 4 abgeformt sind. Für den Beobachter sind jeweils nur die Flächenelemente 12, 13, 14 sichtbar, die das auf ihre optisch wirksamen Strukturen 4 einfallende Licht in das Auge des Beobachters ablenken. Durch Drehen oder Kippen des Sicherheitselements 1 um eine seiner drei Achsen werden andere Flächenelementen 12, 13, 14 sichtbar und verändern deshalb das durch die optische Wirkung des Flächenmusters 11 erkennbare Bild.

Unabhängig von den Flächenelementen 12, 13, 14 ist wenigstens ein Teil des Flächenmusters 11 mit einem Netz aus einer Vielzahl von Einheitszellen 15 von beispielsweise quadratischer oder hexagonaler Form überzogen. Die Einheitszellen 15 haben Abmessungen kleiner als 0,2 mm. Die Einheitszellen 15 weisen eine auf ihr Zentrum ausgerichtete Elementfläche 16 oder eine Gruppe regelmässig angeordneter Teilflächen 17 auf. Die Elementflächen 16 weisen eine Kreisform oder die Form eines regelmässigen Vielecks auf. Die Einheitszellen 15 bilden einen Raster 18, der in Wirklichkeit nicht vorhanden ist und nur zur leichteren Erklärung der vorbestimmten Anordnung der Elementflächen 16 auf dem Flächenmuster 11 dient. In die Elementflächen 16 und in die Teilflächen 17 sind optisch wirksame Strukturen 4, wie lichtbeugende oder lichtstreuende Reliefstrukturen, oder Spiegelflächen 10, abgeformt, die unabhängig von den optisch wirksamen Strukturen 4 der Flächenelemente 12, 13, 14 sind. Die optisch wirksamen Strukturen 4 der Flächenelemente 12, 13, 14 erfüllen in den Einheitszellen 15 die Flächen ausserhalb der Elementflächen 16 bzw. der Teilflächen 17 entsprechend der Einteilung der Flächenelemente 12, 13, 14 im Flächenmuster 11 aus. Die Einteilung ist in der Zeichnung der Figur 2 nur beispielhaft dargestellt und zeigt nur die Unabhängigkeit des Rasters 18 von der Einteilung des Flächenmusters 11. Die Flächenelemente 12 bis 14 sind meist viel grösser als die Einheitszellen 15. Die Einheitszellen 15 sind in Grösse und Form identisch und haben eine Abmessung von weniger als 0,2 mm. Die Elementflächen 16 weisen eine grösste Abmessung (Durchmesser, Diagonale) von weniger als 0,2 mm, z. B. 0,17 mm auf. Damit sind die Abmessungen so klein, dass die Elementflächen 16 im Flächenmuster 11 bei einer Betrachtungsdistanz von 30 cm nicht mehr mit dem blossen Auge erkennbar sind, d.h. der Beobachter erkennt beim Drehen und Kippen nur einen Hintergrund mit den von der Beobachtungsrichtung abhängigen Bildern des Flächenmusters 11, die von den Flächenelementen 12 bis 14 erzeugt werden. Der Flächenanteil der Elementfläche 16 in der Einheitszelle 15 weist einen Wert im Bereich zwischen 40% und 70% der Fläche der Einheitszelle 15 auf, z.B. 57%. In Bereichen mit der Einheitszelle 15 mit der Elementfläche 16 stellt der Beobachter einen Kontrast infolge eines merklichen Helligkeitsverlustes fest, wenn er diese Bereiche mit den Flächenelementen 12 bis 14 ohne diese Elementflächen 16 vergleicht.

In den Einheitszellen 15 sind die Elementflächen 16 so angeordnet, dass sie ein Muster, z.B. ein Schriftzug oder ein graphisches Zeichen bilden, wobei der Raster 18 der Einheitszellen 15 eine Pixeleinteilung dieses Musters ist. Nach dem oben gesagten könnte der Beobachter dieses Muster anhand des Kontrastes erkennen. Damit die im Muster enthaltene Information vom blossen Auge nicht erkannt wird, sind die von den Elementflächen 16 freien Einheitszellen 15 in ihrer wirksamen Fläche so zu verkleinern, dass ihre Flächenhelligkeit den Einheitszellen 15 mit den Elementflächen 16 angeglichen ist und der Kontrast für den Beobachter verschwindet. In jede von Elementflächen 16 freie Einheitszelle 15 wird eine Gruppe der Teilflächen 17 einbeschrieben. Die Gesamtfläche der Teilflächen 17 in der Einheitszelle 15 entspricht der Elementfläche 16. Es sind wenigstens drei Teilflächen 17 in der Einheitszelle 15 angeordnet und möglichst gleichmässig unter Berücksichtigung der benachbarten Einheitszellen 15 verteilt. Die Abmessungen der Einheitszellen 15, der Elementflächen 16 und der Teilflächen 17 liegen weit unterhalb der Auflösung des menschlichen Auges.

In jeder Elementfläche 16 bzw. in jeder Teilfläche 17 der Einheitszelle 15 unterbricht die optisch wirksame Struktur der Elementfläche 16 bzw. der Teilfläche 17 die optisch wirksame Strukturen 4 der Flächenelemente 12 bis 14. Die Elementfläche 16 bzw. die Teilfläche 17 ist mit Vorteil als Spiegelfläche 10 ausgeführt oder weist eine Mattstruktur oder ein Beugungsgitter auf. Die Figur 3a zeigt als Beispiel für eine Elementfläche 16 mit der Form eines regelmässigen Vielecks eine sechseckförmige Elementfläche 16. Ein zirkulares Beugungsgitter 19 mit Furchen in Sechseckform füllt die sechseckförmige Elementfläche 16 vollständig aus. Die Furchen weisen daher mit Vorteil die Form der Elementfläche 16 auf. In der Figur 3b ist die kreisförmige Elementfläche 16 mit dem zirkularen Beugungsgitter 19 mit kreisrunden Furchen belegt. Die übrige Fläche der Einheitszelle 15 weist z.B. die optisch wirksame Struktur 4 (Fig. 1) des Flächenelements 12 auf. Die zirkularen Beugungsgitter 19 weisen eine vorbestimmte Spatialfrequenz f auf. Auch die Reliefstruktur einer Fresnellinse ist für die Elementflächen 16 geeignet. Für die viel kleineren Teilflächen 17 (Fig. 2) sind Fresnellinsen-Strukturen ungeeignet. Mit Vorteil werden Elementflächen 16 mit Fresnellinse mit mit der Mattstruktur belegten Teilflächen 17 kombiniert, da dann sowohl die Elementflächen 16 als auch die Teilflächen 17 weisses Licht zum Beobachter ablenken.

Die bislang betrachtete Einheitszelle 15 hat eine quadratische Form. Jedoch ermöglichen auch eine Rechteck - oder Sechseckform der Einheitszelle 15 eine lückenlose Bedeckung der Fläche des Rasters 18 (Fig. 2).

In der Figur 4 sind zwei Einheitszellen 15 gezeigt, wobei die eine Einheitszelle 15 die Elementfläche 16 umgeben von der optisch wirksamen Struktur 4 des Flächenelements 12 als Hintergrund zeigt. Auf der anderen Einheitszelle 15 sind vor dem gleichen Hintergrund die Teilflächen 17 angeordnet. Mit Vorteil weisen die Elementflächen 16 bzw. die Teilflächen 17 in einem Muster dieselbe optisch wirksame Struktur 4, z.B. ein lineares Beugungsgitter 20, auf.

Ein Vorteil vorliegender Erfindung ist die hohe Reproduzierbarkeit der Anordnung der Elementflächen 16 und der Teilflächen 17 im Flächenelement 11, da die optisch wirksame Strukturen der Elementflächen 16 und der Teilflächen 17 zusammen mit der optisch wirksamen Struktur 4 in einem Arbeitsgang in die Lackschicht 6 (Fig. 1) abgeformt werden können. Im Sicherheitselement 1 sind die Elementflächen 16 und die Teilflächen 17 unter der Deckschicht 5 angeordnet und daher vor mechanischen und/oder chemischen Angriffen geschützt.

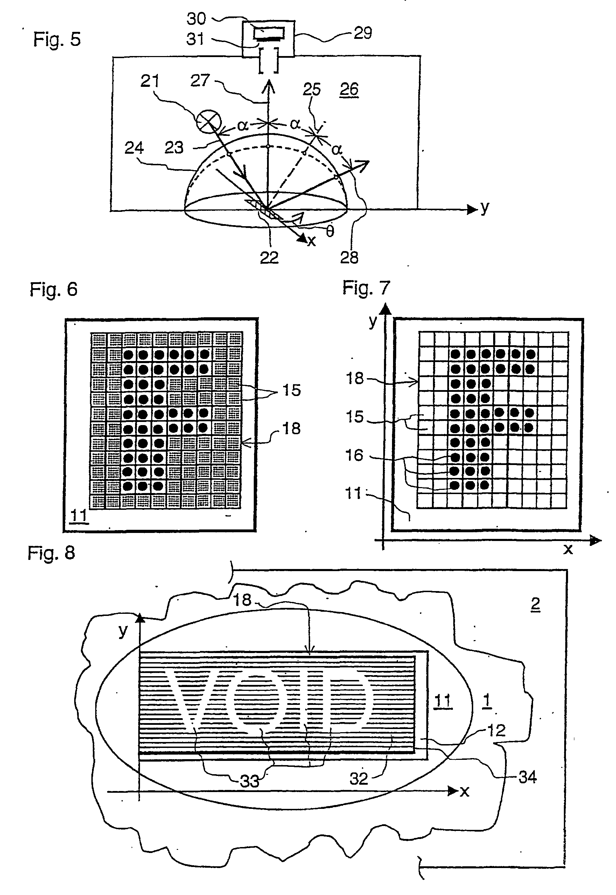

In der Figur 5 ist ein Querschnitt durch eine digitale, optische Abtastvorrichtung (= Scanner) eines modernen Farbkopierers mit digitaler Abtastung, nachstehend als Farbkopierer bezeichnet, schematisch dargestellt. Ein mittels einer Weisslichtquelle 21 beleuchteter schmaler Streifen 22 liegt in einer von Koordinatenrichtungen x und y aufgespannten x-y-Ebene. Der Streifen 22 ist ein beleuchteter Teil des Flächenmusters 11 (Fig. 2) bzw. der Elementflächen 16 (Fig. 2) und der Teilflächen 17 (Fig. 2). Wenigstens ein Teil des auf den Streifen 22 einfallenden Lichtstrahls 23 wird in einen Halbraum 24 über dem beleuchteten Streifen 22 zurückgeworfen. Ist der Streifen 22 eine Spiegelfläche 10 (Fig.

1), so wird das einfallende Licht hauptsächlich nach dem Reflexionsgesetz als Reflexionsstrahl 25 zurückgeworfen. Die Richtung des einfallenden Lichtstrahls 23 und der Reflexionsstrahl 24 spannen eine Beugungsebene 26 auf. Die Beugungsebene 26 schneidet den als Halbkugel dargestellten Halbraum 24 in einem gestrichelt gezeichneten Grosskreis und steht senkrecht auf der x-y-Ebene. Der Streifen 22 ist mit dem linearen Beugungsgitter 20 (Fig. 4) belegt, dessen hier nicht gezeigter Gittervektor in der Beugungsebene 26 liegt und zur Koordinatenrichtung y, d.h. zur Abtastrichtung, ausgerichtet ist. Der Gittervektor weist einen zur Koordinatenrichtung x gemessenen Azimut $\theta$ von 90° bzw. 270° auf. Das am linearen Beugungsgitter 20 gebeugte Licht wird in Spektralfarben aufgespalten und in der Beugungsebene 26 in zum Reflexionsstrahl 25 symmetrischen Richtungen 27, 28 abgelenkt. Die Spatialfrequenz f und die Wellenlänge $\lambda$ des gebeugten Lichts bestimmen den Beugungswinkel zwischen dem Reflexionsstrahl 25 und den Richtungen 27 bzw. 28. Im gezeigten Beispiel steht die Richtung 27 senkrecht auf der x-y-Ebene. Die Parameter des Beugungsgitters 20 sind so zu wählen, dass der Lichtstrahl 23 für eine vorbestimmte Spektraffarbe in die Richtung 27 der Normalen zur x-y-Ebene gebeugt und von einem Lichtempfänger 29 registriert wird. Weicht der Gittervektor vom Azimut $\theta$ = 90° bzw. 270° ab und/oder das gebeugte Licht gelangt wegen einer unpassenden Spatialfrequenz f nicht in den Lichtempfänger 29, wird der Streifen 22 vom Farbkopierer wegen des an der Reliefstruktur des Beugungsgitters 20 gestreuten Lichts in einem dunklen Grauton wiedergegeben. Weist das Beugungsgitter 20 eine sehr hohe Liniendichte (> 2'500 Linien/mm) auf, kann nicht einmal dessen erste Ordnung in den Halbraum 24 abgestrahlt werden, daher verhält sich das lineare Beugungsgitter 20 nullter Ordnung wie ein farbiger Spiegel, und wird wie die Spiegelfläche 10 im Farbkopierer als schwarz registriert, da kein Licht in den Lichtempfänger 29 fällt. Weist der Streifen 22 eine Mattstruktur auf, wird das einfallende weisse Licht 23 ohne spektrale Aufspaltung in den ganzen Halbraum 24 gestreut und vom Farbkopierer entsprechend der Intensität als weiss oder grau registriert. Im Gegensatz zu einer isotropen Mattstruktur lenkt eine anisotrope Mattstruktur das einfallende Licht 23 bevorzugt in einen vorbestimmten Raumwinkelbereich ab. Die anisotrope Mattstruktur ermöglicht die Wiedergabe von vorbestimmten Grauwerten. Absorbiert der Streifen 22 das einfallende Licht 23, wird in den Halbraum 24 kein Licht zurückgeworfen. Der Einfallswinkel der Lichtstrahlen 23 auf die x-y-Ebene weist einen Wert im Bereich von 25° bis 30° auf und ist typisch für den jeweiligen Hersteller des Farbkopierers.

Die Verwendung von verschiedenen linearen Beugungsgittem 20 nullter Ordnung für die Struktur der Elementflächen 16 und der Teilflächen 17 des Rasters 18 ergibt ein Mosaikbild aus verschieden farbigen Spiegelflächen, wenn der Raster 18 in von der versteckten Information und dem Mosaik des Flächenmusters 11 unabhängige Farbbereiche des Mosaikbilds eingeteilt ist. Der Beobachter erkennt unter den Beobachtungsbedingungen für die Spiegelreflexion, d.h. unabhängig von der Richtung des Gittervektors, das Mosaikbild, wobei das blosse Auge die Elementflächen 16 und die Teilflächen 17 nicht auflösen kann. Die Farbbereiche des Rasters 18, in denen die Elementflächen 16 und die Teilflächen 17 mit den gleichen Beugungsgitterstrukturen nullter Ordnung belegt sind, erscheinen daher dem Beobachter als homogene Farbflächen. Für den Beobachter, in dessen Auge die Reflexionsstrahlen 25 gelangen, ist in Spiegelreflexion das bunte Mosaikbild sichtbar; im Farbkopierer hingegen gelangt wie beim ebenen Spiegel kein Licht des Mosaikbilds in den Lichtempfänger 29. Der Vorteil des Mosaikbilds ist ein zusätzliches Merkmal, um das Original des Sicherheitselements 1 von einer Farbkopie, die das Mosaikbild nicht aufweist, zu unterscheiden. Anstelle eines einzigen linearen Beugungsgitters 20 für den ganzen Farbbereich, ergeben im Farbbereich wenigstens zwei gleichmässig in der Beugungsgitterstruktur nullter Ordnung des Farbbereichs verteilte Beugungsgitterelemente mit unterschiedlichen Spatialfrequenzen f für den Beobachter eine Mischfarbe, die von den Spatialfrequenzen f und von den Flächenanteilen der Beugungsgitterelemente abhängig ist.

Ein Farbkopierer besitzt üblicherweise eine Auflösung von wenigstens 12 Punkten/mm (= 300 dpi) in jeder der kartesischen Koordinatenrichtung x und y. Die Weisslichtquelle 21 sendet die Lichtstrahlen 23 parallel zur gezeichneten Beugungsebene 26 schief auf den Streifen 22 und beleuchtet den längs der Koordinatenrichtung x ausgerichteten schmalen Streifen 22. Alles Licht, das in der Richtung 27 zurückgeworfen wird, gelangt in einen von einer Vielzahl von Photodetektoren 30 des Lichtempfängers 29. In der Zeichnung der Figur 5 ist der Lichtempfänger 29 schematisch im Schnitt gezeigt. In der Koordinatenrichtung x dehnen sich der beleuchtete schmale Streifen 22 und der Lichtempfänger 29 über die ganze Breite einer Auflage für die zu kopierenden Substrate 2 (Fig. 1), beispielsweise eines A4 bzw. A3 Blattes, aus. Für jede der drei Grundfarben sind wenigstens 12 Photodetektoren 30 pro Millimeter angeordnet. Zum digitalen Abtasten bewegen sich die Weisslichtquelle 21 und der Lichtempfänger 29 schrittweise entlang der Koordinatenrichtung y, der Abtastrichtung. Bei jedem Schritt wird ein im Lichtempfänger 29 auf lichtempfindlichen Oberflächen 31 der Photodetektoren 30 registriertes Abbild des beleuchteten schmalen Streifens 22 punktweise von den Photodetektoren 30 abgetastet. Beim Auslesen des Abbilds werden von den Photodetektoren 30 Intensitätswerte der in Richtung 27 abgelenkten Lichtstrahlen 23 für jede Grundfarbe registriert.

Infolge der endlichen Auflösung im Lichtempfänger 29 hängt das registrierte Signal von der Füllung und der Strukturierung der Einheitszelle 15 ab. Eine Elementfläche 16 (Fig. 2) wird wegen der Auflösung des Farbkopieres erfasst und in einer Farbkopie abgebildet, während die viel kleineren Teilflächen 17 vom Farbkopierer nicht erfasst und in der Farbkopie unterdrückt werden. In der Farbkopie ist daher die im Flächenmuster 11 versteckte Information sichtbar gemacht. Eine mögliche Ausführung des Farbkopierers unterdrückt das Signal eines einzelnen Photodetektors 30, falls benachbarte Photodetektoren 30 stark abweichende Intensitätswerte registrieren, indem das abweichende Signal den benachbarten Werten angeglichen wird. Dies unterdrückt Störsignale. Dieses Verfahren wird für jede Grundfarbe unabhängig von den beiden anderen durchgeführt. Ähnliche Intensitätsvergleiche in der Koordinatenrichtung y finden nicht statt. Da nur die Elementflächen 16 registriert werden, ist die versteckte Information unabhängig von der Abtastrichtung des Farbkopierers. Die maximale Abmessung der Teilflächen 17 in der Form eines Quadrats oder Kreises oder einer anderen regelmässigen Fläche bestimmt, bis zu welcher Auflösung des Farbkopierers der beschriebene Schutzeffekt wirksam ist. Wenn z.B. die maximale Abmessung 0,04 mm bzw. 0.02 mm beträgt, ist die Schutzwirkung beim Farbkopierer mit einer Auflösung bis zu 24 Punkten/mm (= 600 dpi) bzw. 48 Punkten/mm (= 1200 dpi) gegeben, da ein Signal der Teilfläche 17 bei der Abtastung unterdrückt wird, weil höchstens ein einzelner Photodetektor 30 ein Signal für die Teilfläche 17 erzeugt. Bei der Elementfläche 16 hingegen erfasst der Farbkopierer die Elementfläche 16, da selbst bei einer niedrigen Auflösung von 12 Punkten/mm wenigstens zwei nebeneinanderliegende Photodetektoren 30 das Signal der Elementfläche 16 registrieren.

Damit das gebeugte Licht in die Richtung 27, der Normalen zur x-y-Ebene, aus den Flächenelementen 12, 13, 14 (Fig. 2) bzw. aus den Elementflächen 16 oder aus den Teilflächen 17, in den Lichtempfänger 29 abgelenkt wird, müssen für die lichtbeugenden Strukturen 4 (Fig. 1) die Spatialfrequenzen f gemäss der Gleichung

$$\sin(\delta = 0°) - \sin(\alpha) = k\cdot\lambda\cdot f$$

gewählt werden, wobei $\alpha$ der Einfallswinkel der Lichtstrahlen 23, $\delta = 0°$ der Beugungswinkel des in die zur x-y-Ebene normalen Richtung 27 gebeugten Lichts mit der Wellenlänge $\lambda$ und k die Beugungsordnung bezeichnen. Für einen Einfallswinkel $\alpha$ von 25° bis 30° und bei k = 1 liegt der Bereich der Spatialfrequenzen f zwischen 725 Linien/mm und 1025 Linien/mm; bei k = 2 liegen die brauchbaren Spatialfrequenzen f zwischen 350 Linien/mm und 550 Linien/mm, damit das gebeugte Licht zum Lichtempfänger 29 gelangt. Die Bereichsgrenzen sind durch die Farbempfindlichkeit des Lichtempfängers 29 vorbestimmt. Um allfällige Unebenheiten des Flächenmusters 11 auszugleichen, ist es von Vorteil, die Spatialfrequenz f zu modulieren, wobei sich die Spatialfrequenz f über eine Periode von 0,2 mm bis 0,6 mm mit einem Hub von 5 Linien periodisch ändert. Diese Betrachtung gilt nur solange der Gittervektor des linearen Beugungsgitters 20 in der Beugungsebene 26 enthalten ist, d.h. solange die Abtastrichtung zum Gittervektor im wesentlichen parallel ist. Bei einer beliebigen Abtastrichtung durchstösst der Gittervektor die Beugungsebene 26 und das lineare Beugungsgitter 20 wirkt, ungeachtet seiner Spatialfrequenz f, wie eine Mattstruktur und wird vom Farbkopierer in einem Grauton wiedergegeben.

Weniger kritisch bezüglich der Beleuchtungsverhältnisse im Farbkopierer sind die Beispiele, bei denen die Flächenelemente 12 bis 14 eine Spiegelfläche 10 (Fig. 1) oder eine der lichtbeugenden Strukturen, deren Spatialfrequenz f nicht aus dem vorbeschriebenen Spatialfrequenzbereich stammt, und die Elementflächen 16 und die Teilflächen 17 eine der Mattstrukturen aufweisen bzw. bei denen die Elementflächen 16 und die Teilflächen 17 mit der Spiegelfläche 10 und die Flächenelemente 12 bis 14 mit der Mattstruktur oder mit einer der lichtbeugenden Strukturen mit einer Spatialfrequenz f aus dem vorbeschriebenen Spatialfrequenzbereich belegt sind.

Die Figur 6 zeigt das stark vergrösserte Original des Flächenmusters 11. Unabhängig vom hier nicht gezeigten Mosaik der Flächenelemente 12 , 13, 14 (Fig. 2) ist ein Teil des Flächenmusters 11 in den Raster 18 eingeteilt. Der Raster 18 der aneinanderstossenden Einheitszellen 15 hat in dieser Ausführung eine Auflösung von wenigstens acht Einheitszellen 15 pro Millimeter. Die Einteilung des Flächenmusters 11 in die Einheitszellen 15 mit den Elementflächen 16 und mit den Teilflächen 17 ist durch die versteckte Information bestimmt. Die versteckte Information ist in diesem Beispiel der Buchstabe "F". Mit dem blossen Auge ist der Beobachter nicht in der Lage, die versteckte Information zu erkennen, da die Einheitszellen 15 mit den Elementflächen 16 und mit den Teilflächen 17 in der Helligkeit angeglichen sind.

Ein Dokument mit dem Substrat 2 mit dem Sicherheitselement 1 (Fig. 1) wird bei einer beliebigen Orientierung des Flächenmusters 11 mit dem Farbkopierer kopiert.

Die Figur 7 zeigt in gleicher Vergrösserung die Farbkopie des Originals des Flächenmusters 11. Das Mosaik der Flächenelemente 12, 13, 14 (Fig. 2) des Flächenmusters 11 wird so wiedergegeben, wie die Intensität des an den optisch wirksamen Strukturen 4 (Fig. 1) des Flächenmusters 11 in die Richtung 27 (Fig. 5) abgelenkten Lichts registriert wird. Die Elementflächen 16 werden als Punkte oder die Elementflächen 16 verbindende, hier nicht gezeigte Linienstücke in der Farbe des in die Richtung 27 abgelenkten Lichts wiedergegeben. Die Linienstücke sind ein Artefakt des Farbkopierers. Die mit den Punkten und den Linienstücken, der feinen "Schraffur", erfüllten Flächen heben sich durch einen Farbkontrast von den von Schraffur freien Flächen ab. Andererseits sind die Teilflächen 17 (Fig. 2) in der Farbkopie nicht wiedergegeben, da der Lichtempfänger 29 (Fig. 5) die Teilflächen 17 nicht registriert oder das Signal unterdrückt. Die Einheitszellen 15 mit den Teilflächen 17 sind solche von Schraffur freie Flächen. In der Farbkopie ist die versteckte Information vor dem Hintergrund der Flächenelemente 12, 13, 14, in diesem Beispiel der Buchstabe "F", mit blossem Auge zu erkennen. Die versteckte Information ist in der Farbkopie durch einen Farbkontrast oder Grauwertkontrast, der beim Kopieren als Artefakt des Farbkopierers erzeugt wird, wiedergegeben.

Wie oben erwähnt ist der Lichtempfänger 29 (Fig. 5) in eine endliche Anzahl der Photodetektoren 30 unterteilt. Quer zur Abtastrichtung wird das von den Photodetektoren 30 erfasste Abbild des Streifens 22 in einzelne Pixel aufgelöst.

Beispielsweise ist das Flächenmuster 11 so ausgerichtet, dass die Abtastrichtung mit der Koordinatenrichtung y zusammenfällt. Die Begrenzungen des Rasters 18 sind parallel zu den Koordinatenrichtungen x und y ausgerichtet. In der Farbkopie des in der Koordinatenrichtung y abgetasteten Sicherheitselements 1 (Fig. 1) sind im Bereich der Einheitszellen 15 mit den Elementflächen 16 zusätzlich zum Abbild des Flächenmusters 11 die Elementflächen 16 verbindende Linien oder Linienstücke als Artefakt entstanden. Der Beobachter erkennt die zur Anwendung gelangte Abtastrichtung. Sie ist senkrecht zu den Linien oder Linienstücken gerichtet. Die versteckte Information ist auch durch eine vertauschte Anordnung der Elementflächen 16 und der Gruppen der Teilflächen 17 im Raster 18 zu erreichen.

In der Figur 8 ist eine solche Ausführung gezeigt. Das Sicherheitselement 1 weist innerhalb des Flächenmusters 11 einen Hintergrundbereich 32 und Zeichenbereiche 33 auf. Der Hintergrundbereich 32 hat beispielsweise den Raster 18 (Fig. 2) in Form einer Schrifttafel 34, auf der die Zeichenbereiche 33 die versteckte Information bilden. Im Hintergrundbereich 32 sind die Elementflächen 16 (Fig. 4) in den Einheitszellen 15 und in den Zeichenbereichen 33 die Teilflächen 17 in den Einheitszellen 15 angeordnet. Die Zeichenbereiche 33 heben sich in der Farbkopie durch den Farbkontrast vom Hintergrundbereich 32 so ab, dass die versteckte Information mit blossem Auge deutlich sichtbar ist.

In einem ersten Ausführungsbeispiel der Schrifttafel 34 weist das Flächenelement 12 das linearen Beugungsgitter 20 (Fig. 4) als optisch wirksame Struktur 4 (Fig. 1) auf. Im Farbkopierer erfolgt die Abtastung parallel zum Gittervektor des Beugungsgitters 20, so dass die Fläche des Flächenetements 12 in der durch die Spatialfrequenz f vorgegebenen Farbe wiedergegeben wird. Die Elementflächen 16 und die Teilflächen 17 weisen als optisch wirksame Struktur 4 die Spiegelflächen 10 (Fig. 1) auf. Die Farbkopie zeigt das Flächenelement 12 der vorbestimmten Farbe, z.B. Gelb, oder in einem Grauton, falls die Abtastrichtung und der Gittervektor nicht zusammenfallen. In der Farbkopie weist der Hintergrundbereich 32 die Farbe bzw. den Grauton des Flächenelements 12 auf, jedoch ist der Hintergrundbereich 32 infolge der feinen schwarzen Schraffuren gegenüber dem übrigen Flächenelement 12 abgedunkelt. Die von den Schraffuren freien Zeichenbereiche 33 heben sich daher durch den Farb- oder Grauwertkontrast vom Hintergrundbereich 32 ab. Im gezeigten Beispiel formen die Zeichenbereiche 33 die Information "VOID". Sowohl bei der Wiedergabe des Flächenelements 12 in Farbe als auch im Grauton ist die Information gut von blossem Auge erkennbar. Unabhängig von der Abtastrichtung ist somit die versteckte Information in der Farbkopie gut sichtbar, wenn auch das Aussehen der Farbkopie des Flächenmusters 11 von der Abtastrichtung abhängt.

Weisen die Elementflächen 16 und die Teilflächen 17 ebenfalls ein lineares Beugungsgitter 20 mit der Spatialfrequenz $f_K$ als optisch wirksame Struktur 4 auf, dessen Gittervektor parallel zum Gittervektor der Beugungsstruktur mit der Spatialfrequenz $f_E$ im Flächenelement 12 und zur Abtastrichtung, z.B. zur Koordinatenrichtung y, verläuft, müssen sich die aus dem vorbeschriebenen Spatialfrequenzbereich stammenden Spatialfrequenzen $f_K$ und $f_E$ derart unterscheiden, dass in der Farbkopie ein deutlich wahrnehmbarer Farbkontrast zwischen den Zeichenbereiche 33 und dem Hintergrundbereich 32 entsteht.

Sobald die Abtastrichtung im wesentlichen nicht mehr parallel zu den beiden Gittervektoren verläuft, werden in der Farbkopie der Hintergrund und die Schraffur im Hintergrundbereich 32 praktisch im gleichen Grauton wiedergegeben, so dass die Information nicht mehr erkennbar ist.

Dieser Nachteil ist behoben, wenn in den Elementflächen 16 das zirkuläre Beugungsgitter 19 (Fig. 3) mit der Spatialfrequenz $f_K$ als optisch wirksame Struktur 4 abgeformt ist, da aus jeder Abtastrichtung wenigstens die Schraffur in der vorbestimmten Farbe in der Farbkopie erscheint und damit die Information sichtbar ist.

In einer weiteren Ausführung sind in den Flächenelementen 12 bis 14 (Fig. 2) wenigstens im Bereich der Schrifttafel 34 die zirkulären Beugungsgitter 19 mit der Spatialfrequenz $f_E$ regelmässig angeordnet, damit die vorbestimmte Farbe des Flächenelementes 12 unabhängig von der Abtastrichtung in der Farbkopie wiedergegeben ist. Die zirkulären Beugungsgitter 19 erfüllen beispielsweise Quadrate mit einer Seitenlänge von etwa 100 Mikrometern und sind aneinanderstossend im Flächenelement 12 plaziert.

In einer weiteren Ausführung weist das Flächenelement 12 eine Mattstruktur auf. Spiegelflächen 10 bedecken die Elementflächen 16 und die Teilflächen 17. In der Farbkopie erscheint das Flächenelement in weisser bis hellgrauer Farbe, während der schwarz schraffierte Hintergrundbereich 32 abgedunkelt ist.

In einer weiteren Ausführung ist das Flächenelement 12 eine Spiegelfläche 10 und die Elementflächen 16 und die Teilflächen 17 weisen der Mattstruktur auf. In der Farbkopie erscheinen das Flächenelement und die Zeichenbereiche 33 schwarz. Der Hintergrundbereich 32 wird durch die Schraffur in weisser bis hellgrauer Farbe aufgehellt.

Die vier zuletzt beschriebenen Ausführungen weisen den Vorteil auf, dass die im Original mit blossem Auge nicht wahrnehmbare versteckte Information von der Abtastrichtung unabhängig in der Farbkopie mit dem blossen Auge sichtbar gemacht ist.

**Patentansprüche**

1.  Sicherheitselement (1) mit einem in einem Schichtverbund (3) aus Kunststoff eingebetteten, aus vorbestimmten Beobachtungsrichtungen visuell erkennbaren, reflektierenden, optisch variablen, aus einem Mosaik von Flächenelementen (12; 13; 14) mit optisch wirksamen Strukturen (4) gebildeten Flächenmuster (11),
    **dadurch gekennzeichnet,**
    **dass** ein Teil des Flächenmusters (11) entsprechend einem regelmässigen Raster (18) in gleich grosse Zellen (15) eingeteilt ist, dass jede Zelle (15) mit einer einzigen Elementfläche (16) oder mit einer Gruppe von identischen Teilflächen (17) belegt ist, dass die Elementflächen (16) und die Teilflächen (17) eine vom Mosaik des Flächenmusters (11) unabhängige, optisch wirksame Struktur (4) enthalten, dass im Raster (18) wenigstens fünf Zellen (15) pro mm vorgesehen sind, dass der Durchmesser der Elementflächen (16) weniger als 0,2 mm und eine grösste Abmessung der Teilflächen (17) weniger als 0,04 mm beträgt, wobei die Elementfläche (16) bzw. die Gruppe der Teilflächen (17) einen gleichen Flächenanteil im Bereich von 40 % bis 70% der Zelle (15) einnimmt, und dass die Anordnung der Elementflächen (16) und der Teilflächen (17) im Raster (18) eine mit blossem Auge nicht wahrnehmbare versteckte Information in Form von grafischen bzw. alphanumerischen Zeichen bildet, die jedoch in einer Farbkopie mit einem mit dem blossen Auge erkennbaren, beim Kopieren als Artefakt erzeugten Farb- oder Grauwertkontrast wiedergegeben sind.

2.  Sicherheitselement nach Anspruch 1,
    **dadurch gekennzeichnet,**
    **dass** eine Einheitszelle (15) des Rasters (18) eine Rechteck - oder eine Sechseckform aufweist.

3.  Sicherheitselement nach Anspruch 1 oder 2,
    **dadurch gekennzeichnet ,**
    **dass** die optisch wirksamen Strukturen (4) in den Elementflächen (16) und in den Teilflächen (17) Spiegelflächen (10) und in den Flächenelementen (12; 13; 14) mikroskopisch feine, lichtstreuende oder lichtbeugende Reliefstrukturen sind.

**4.** Sicherheitselement nach Anspruch 1 oder 2, **dadurch gekennzeichnet,** **dass** die optisch wirksamen Strukturen (4) in den Elementflächen (16) und in den Teilflächen (17) mikroskopisch feine, lichtstreuende oder lichtbeugende Reliefstrukturen und in den Flächenelementen (12; 13; 14) Spiegelflächen (10) sind.

**5.** Sicherheitselement nach Anspruch 1 oder 2, **dadurch gekennzeichnet ,** **dass** die optisch wirksamen Strukturen (4) sowohl in den Elementflächen (16) und in den Teilflächen (17) als auch in den Flächenelementen (12; 13; 14) mikroskopisch feine, lichtbeugende Reliefstrukturen sind, wobei sich die lichtbeugende Reliefstruktur der Elementflächen (16) und der Teilflächen (17) von den lichtbeugenden Reliefstrukturen der Flächenelemente (12; 13; 14) wenigstens im Azimut und /oder in der Spatialfrequenz (f; $f_E$; $f_K$) unterscheidet.

**6.** Sicherheitselement nach einem der Ansprüche 3 bis 5, **dadurch gekennzeichnet,** **dass** die mikroskopisch feinen, lichtbeugenden Reliefstrukturen lineare Beugungsgitterstrukturen mit vorbestimmten Spatialfrequenzen f sind.

**7.** Sicherheitselement nach einem der Ansprüche 3 bis 5, **dadurch gekennzeichnet ,** **dass** die mikroskopisch feinen, lichtbeugenden Reliefstrukturen zirkuläre Beugungsgitter (19) mit vorbestimmten Spatialfrequenzen f sind.

**8.** Sicherheitselement nach Anspruch 6 oder 7, **dadurch gekennzeichnet ,** **dass** die Spatialfrequenzen (f; $f_E$; $f_K$) der Beugungsgitterstrukturen aus den Bereichen 350 bis 550 Linien pro Millimeter und/oder 725 bis 1025 Linien pro Millimeter gewählt sind.

**9.** Sicherheitselement nach Anspruch 8, **dadurch gekennzeichnet,** **dass** die Spatialfrequenz (f; $f_E$; $f_K$) eine periodische Modulation mit einem Hub von 5 Linien pro Millimeter über eine Periode von 0,2 mm bis 0,6 mm aufweist.

**10.** Sicherheitselement nach Anspruch 5, **dadurch gekennzeichnet,** **dass** die Elementflächen (16) und die Teilflächen (17) des Rasters (18) Farbbereichen eines von der versteckten Information und dem Mosaik des Flächenmusters (11) unabhängigen, aus den Farbbereichen bestehenden Mosaikbildes zugeordnet sind, und dass in jedem der Farbbereiche die Elementflächen (16) und die Teilflächen (17) eine vorbestimmte, in die nullte Ordnung beugende Gitterstruktur mit Spatialfrequenzen (f; $f_E$; $f_K$) höher als 2500 Linien pro Millimeter aufweisen.

**11.** Sicherheitselement nach Anspruch 3 oder 4, **dadurch gekennzeichnet ,** **dass** die mikroskopisch feine, lichtstreuende Reliefstruktur eine Mattstruktur ist.

**Claims**

**1.** Security element (1) having a two-dimensional pattern (11) which is embedded in a layer composite (3) made of plastic, can be detected visually from predetermined observation directions, is reflective, optically variable and is formed from a mosaic of two-dimensional elements (12; 13; 14) having optically active structures (4), **characterized in that** part of the two-dimensional pattern (11) is divided up in accordance with a regular grid (18) into cells (15) of equal size, **in that** each cell (15) is occupied by a single element area (16) or by a group of identical subareas (17), **in that** the element areas (16) and the subareas (17) contain an optically active structure (4) that is independent of the mosaic of the two-dimensional pattern (11), **in that** at least five cells (15) per mm are provided in the grid (18), **in that** the diameter of the element areas (16) is less than 0.2 mm and a greatest dimension of the subareas (17) is less than 0.04 mm, the element area (16) or the group of subareas (17) occupying the same proportion of the area in the range from 40% to 70% of the cell (15), and **in that** the arrangement of the element areas (16) and of the subareas (17) in the grid (18) forms an item of hidden information in the form of graphic or alphanumeric symbols which cannot be perceived by the naked eye but which, in a colour copy, are reproduced with a colour or grey value contrast which is produced as an artefact during copying and can be detected by the naked eye.

**2.** Security element according to Claim 1, **characterized in that** a unit cell (15) of the grid (18) has a rectangular or hexagonal shape.

**3.** Security element according to Claim 1 or 2, **characterized in that** the optically active structures (4) in the element areas (16) and in the subareas (17) are reflective areas (10) and in the two-dimensional elements (12; 13; 14) are microscopically fine, light-scattering or light-diffracting relief structures.

**4.** Security element according to Claim 1 or 2, **characterized in that** the optically active structures (4) in the element areas (16) and in the subareas (17) are microscopically fine, light-scattering or light-diffracting relief structures and in the two-dimensional elements (12; 13; 14) are reflective areas (10).

5. Security element according to Claim 1 or 2, **characterized in that** the optically active structures (4) both in the element areas (16) and in the subareas (17) and also in the two-dimensional elements (12; 13; 14) are microscopically fine, light-diffracting relief structures, the light-diffracting relief structure of the element areas (16) and of the subareas (17) differing from the light-diffracting relief structures of the two-dimensional elements (12; 13; 14) at least in azimuth and/or in the spatial frequency (f; $f_E$; $f_K$).

6. Security element according to one of Claims 3 to 5, **characterized in that** the microscopically fine, light-diffracting relief structures are linear diffraction grating structures with predetermined spatial frequencies f.

7. Security element according to one of Claims 3 to 5, **characterized in that** the microscopically fine, light-diffracting relief structures are circular diffraction gratings (19) with predetermined spatial frequencies f.

8. Security element according to Claim 6 or 7, **characterized in that** the spatial frequencies (f; $f_E$; $f_K$) of the diffraction grating structures are selected from the ranges of 350 to 550 lines per millimetre and/or 725 to 1025 lines per millimetre.

9. Security element according to Claim 8, **characterized in that** the spatial frequency (f; $f_E$; $f_K$) has a periodic modulation with a range of 5 lines per millimetre over a period of 0.2 mm to 0.6 mm.

10. Security element according to Claim 5, **characterized in that** the element areas (16) and the subareas (17) of the grid (18) are assigned to coloured regions of a mosaic image which consists of the coloured regions and is independent of the item of hidden information and the mosaic of the two-dimensional pattern (11), and **in that**, in each of the coloured regions, the element areas (16) and the subareas (17) have a predetermined grating structure, diffracting at the zeroth order, with spatial frequencies (f; $f_E$; $f_K$) higher than 2500 lines per millimetre.

11. Security element according to Claim 3 or 4, **characterized in that** the microscopically fine, light-scattering relief structure is a matt structure.

## Revendications

1. Élément de sécurité (1) avec un motif de surface (11) formé d'une mosaïque d'éléments de surface (12 ; 13 ; 14) aux structures (4) à effets optiques, ledit motif étant inséré dans un assemblage fait de couches (3) en matière plastique, pouvant varier optiquement, étant réfléchissant et visuellement reconnaissable depuis des directions d'observation prédéfinies

   **caractérisé en ce qu'**une partie du motif de surface (11) est divisée en cellules de même taille selon un quadrillage (18) régulier, **en ce que** chaque cellule (15) est garnie d'une seule surface d'élément (16) ou d'un groupe de surfaces partielles identiques (17), **en ce que** les surfaces d'éléments (16) et les surfaces partielles (17) contiennent une structure (4) à effets optiques indépendante de la mosaïque du motif de surface (11), **en ce qu'**au moins cinq cellules (15) sont prévues par mm dans le quadrillage (18), **en ce que** le diamètre des surfaces d'éléments (16) est inférieur à 0,2 mm et que la plus grande dimension des surfaces partielles (17) est inférieure à 0,04 mm, moyennant quoi la surface d'élément (16) et/ou le groupe de surfaces partielles (17) occupe une partie de surface semblable dans une plage de 40 % à 70 % de la cellule (15), et **en ce que** la disposition des surfaces d'éléments (16) et des surfaces partielles (17) dans le quadrillage (18) forme des informations cachées invisibles à l'oeil nu, sous la forme de caractères graphiques et/ou alphanumériques, mais qui sont cependant reproduites avec un contraste visible à l'oeil nu en niveaux de gris ou de couleurs générés par phénomène artificiel lors de la copie et sur une copie couleur.

2. Élément de sécurité selon la revendication 1, **caractérisé en ce qu'**une cellule unitaire (15) du quadrillage (18) présente un parallélogramme ou une hexagone.

3. Élément de sécurité selon la revendication 1 ou 2, **caractérisé en ce que**, dans les surfaces d'éléments (16) et dans les surfaces partielles (17), les structures (4) à effets optiques sont des surfaces réfléchissantes (10) et dans les éléments de surfaces (12 ; 13 ; 14), sont des structures à relief de taille microscopique diffractant la lumière ou dispersant la lumière.

4. Élément de sécurité selon la revendication 1 ou 2, **caractérisé en ce que** dans les surfaces d'éléments (16) et dans les surfaces partielles (17), les structures (4) à effets optiques sont des structures à relief de taille microscopique diffractant la lumière ou dispersant la lumière et dans les éléments de surfaces (12 ; 13 ; 14), sont des surfaces réfléchissantes (10).

5. Élément de sécurité selon la revendication 1 ou 2, **caractérisé en ce que** les structures à effets optiques (4) sont des structures à relief de taille microscopique diffractant la lumière aussi bien dans les surfaces d'éléments (16) et dans les surfaces partielles (17) que dans les éléments de surface (12 ; 13 ; 14), moyennant quoi la structure à relief diffractant la lumière des surfaces d'éléments (16) et des surfaces partielles (17) se différencient des structures à relief diffractant la lumière des éléments de surface (12 ; 13 ; 14) au moins dans l'azimut et/ou dans la fréquence spatiale (f ; fE ; fK).

6. Élément de sécurité selon l'une quelconque des revendications 3 à 5, **caractérisé en ce que** les structures à relief de taille microscopique diffractant la lumière sont des structures à réseau linéaires diffractantes avec des fréquences spatiales f prédéfinies.

7. Élément de sécurité selon l'une quelconque des revendications 3 à 5, **caractérisé en ce que** les structures à relief de taille microscopique diffractant la lumière sont des réseaux circulaires (19) diffractants avec des fréquences spatiales f prédéfinies.

8. Élément de sécurité selon la revendication 6 ou 7, **caractérisé en ce que** les fréquences spatiales (f ; fE ; fK) des structures à réseau diffractantes sont choisies parmi les plages allant de 350 à 550 lignes par millimètre et/ou de 725 à 1025 lignes par millimètre.

9. Élément de sécurité selon la revendication 8, **caractérisé en ce que** la fréquence spatiale (f ; fE ; fK) présente une modulation périodique d'une amplitude de 5 lignes par millimètre sur une période de 0,2 mm à 0,6 mm.

10. Élément de sécurité selon la revendication 5, **caractérisé en ce que** les surfaces d'éléments (16) et les surfaces partielles (17) du quadrillage (18) sont associées à des plages chromatiques d'une image de mosaïque constituée des plages chromatiques et indépendante des informations cachées et de la mosaïque du motif de surface (11), et **en ce que** dans chacune des plages chromatiques, les surfaces d'éléments (16) et les surfaces partielles (17) présentent une structure de réseau diffractant à l'ordre zéro de fréquences spatiales (f ; fE ; fK) supérieures à 2500 lignes par millimètre.

11. Élément de sécurité selon la revendication 3 ou 4, **caractérisé en ce que** la structure à relief de taille microscopique dispersant la lumière est une structure mate.

Fig. 1

Fig. 2

Fig. 3a     Fig. 3b     Fig. 4

Fig. 5

Fig. 6

Fig. 7

Fig. 8